Europäisches Patentamt

European Patent Office

Office européen des brevets

(11) Publication number: **0 130 024**
**B1**

# EUROPEAN PATENT SPECIFICATION

(45) Date of publication of patent specification: **23.12.87**

(21) Application number: **84304079.1**

(22) Date of filing: **18.06.84**

(51) Int. Cl.⁴: **F 16 D 35/00,** F 01 P 7/04,
F 16 K 31/10

(54) Viscous fan drive and axially movable valve element.

(30) Priority: **20.06.83 US 506163**

(43) Date of publication of application:
**02.01.85 Bulletin 85/01**

(45) Publication of the grant of the patent:
**23.12.87 Bulletin 87/52**

(84) Designated Contracting States:
**DE FR GB IT**

(56) References cited:
**EP-A-0 055 853**
**US-A-3 144 922**
**US-A-3 339 689**
**US-A-4 281 750**

(73) Proprietor: **EATON CORPORATION**
**100 Erieview Plaza**
**Cleveland Ohio 44114 (US)**

(72) Inventor: **Light, Gerald Marion**
**628 Lyon Lake**
**Marshall Michigan 49068 (US)**

(74) Representative: **Douglas, John Andrew**
**Eaton House Staines Road**
**Hounslow Middlesex TW4 5DX (GB)**

Courier Press, Leamington Spa, England.

## Description

The present invention relates to fluid coupling devices of the type including valve means operable to control the quantity of fluid in the fluid operating chamber. More particularly, the present invention relates to fluid coupling devices of the type including a valve element which is actuated to move in an axial direction between the open and closed positions.

Remotely actuated fluid coupling devices are especially adapted to the use of valve elements which move in an axial direction, because, in a remotely actuated coupling, movement of the valve is usually achieved by means of a device such as a solenoid or fluid pressure piston arrangement which inherently has an axial output movement. It should be understood, however, that the present invention is not limited to use in a fluid coupling device which is controlled by a remote sensing device. The present invention could also be used advantageously in a fluid coupling device in which the valve element is actuated in the manner shown in U.S—A— 3,144,922.

Axially movable valve elements in fluid coupling devices may have certain advantages over rotary valve elements, especially with regard to the simplicity of the valve actuation mechanism. However, there have been several major problems associated with axially movable valve elements. A first problem is the amount of force required to move the valve element axially and uncover the fill port. One cause for the high valve actuation forces is a phenomenon known as "stiction" wherein a flat portion of the valve element is in face-to-face engagement with the adjacent port plate with a thin film of viscous fluid therebetween, such that separation of the valve arm from the port plate requires a certain amount of force to break the fluid film.

Another cause of the high valve actuating force is the fluid pressure head acting to hold the valve element against the port plate. This pressure head is caused by the centrifugal force acting on the fluid as the coupling rotates, and the actual force on the valve arm is equal to at least the product of the fluid pressure against the arm and the area of the fill port being covered by the valve arm. The effect of the fluid pressure head on the valve arm, both for the prior art device and for the present invention, will be described in greater detail subsequently in the specification. High valve actuation forces are especially undesirable in the case of an electrically-actuated fluid coupling in which the size and weight of the solenoid increases exponentially in order to achieve an increase in the output force of the solenoid.

Another problem which has been observed in regard to axially movable valve elements is the lack of an accurate, predictable correlation between the amount of valve lift (axial movement) and flow through the fill port. As is understood by those skilled in the art, when a flat valve arm is lifted from a port plate, the effective port area is not merely equal to the area of the port, nor is the effective port area equal to the product of the circumference of the port and the amount of lift. Instead, it has been found that because of such factors as the flow characteristics of the fluid, fluid viscosity, speed of the coupling, etc., actual valve lift must be substantially greater than the theoretical valve lift in order for the effective port area to be equal to the actual area of the port. This situation makes it even more difficult than usual to achieve a desired relationship between the external condition, such as ambient air temperature or coolant temperature, and output speed (fan speed) of the coupling.

Accordingly, it is an object of the present invention to provide an improved fluid coupling device utilizing an axially movable valve element in which the forces required to actuate the valve are substantially reduced.

It is another object of the present invention to provide a fluid coupling device and axially movable valve element wherein the relationship between valve movement and flow through the fill port is substantially more accurate and predictable than in the prior art disclosure US—A— 4281750 of the pre-characterising portion of Claim 1.

The coupling device is characterized as set forth in Claim 1 also.

FIG. 1 is a fragmentary, axial cross section of a fluid coupling device utilizing the present invention.

FIG. 2 is an elevation view of the valve member included in the fluid coupling device shown in FIG. 1.

FIG. 3 is a transverse cross section taken on line 3—3 of FIG. 1, illustrating the valve member of the invention in the closed position.

FIG. 4 is a transverse cross section, similar to FIG. 3, illustrating the valve member in the open position.

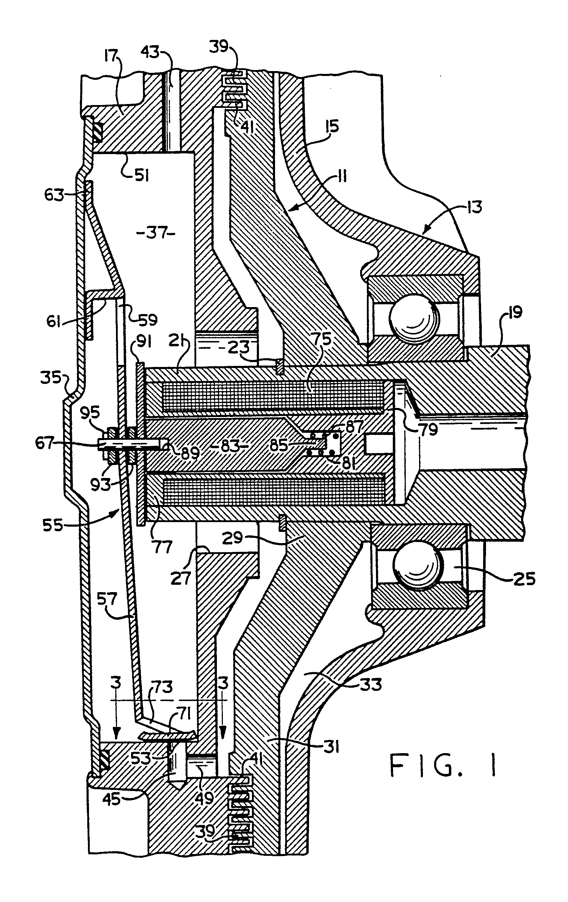

Referring now to the drawings, which are not intended to limit the invention, FIG. 1 illustrates one preferred embodiment of a fluid coupling device of the type in which the present invention may be utilized. The fluid coupling device includes an input coupling member, generally designated 11, and an output coupling assembly, generally designated 13. The assembly 13 includes a cast metal housing member 15 and a cast metal cover member 17, the members 15 and 17 being secured together by a plurality of bolts (not shown). The overall construction of the portions of the coupling device not shown in FIG. 1 may be generally as shown and described in US—A—4,281,750, assigned to the assignee of the present invention and incorporated herein by reference.

The fluid coupling device includes an input shaft 19 including a generally cylindrical hollow portion 21 on which the input coupling member 11 is mounted and retained by a snap ring 23. The input shaft 19 functions as a support for the inner race of a bearing set 25, which is seated on the inside diameter of the housing member 15. The hollow portion 21 of the input shaft 19 extends forwardly (to the left in FIG. 1) through a central opening 27 defined by the cover member 17.

The input coupling member 11 is generally annular and includes a hub portion 29 and an annular, disc-like portion 31. The hub portion 29 is pressed onto a portion of the hollow portion 21, such that rotation of the input shaft 19 causes rotation of the input coupling 11.

The housing member 15 and cover member 17 cooperate to define a fluid operating chamber 33, within which the input coupling 11 is rotatably disposed. The cover member 17 cooperates with a stamped cover member 35 to define therebetween a fluid reservoir chamber 37.

In the subject embodiment, the forward surface of the disc-like portion 31 of the input coupling 11 forms a plurality of annular lands 39 which define a plurality of annular grooves therebetween. The adjacent surface of the cover member 17 forms a plurality of annular lands 41 which define a plurality of annular grooves therebetween. The lands 39 and 41 are interdigitated to define a serpentine-shaped shear space therebetween, as is well known in the art. Although the present invention may be utilized in a fluid coupling device having various shear space configurations, it is especially advantageous in a device having a forward shear space, and more specifically, in such a device in which the shear space is defined by interdigitated lands and grooves.

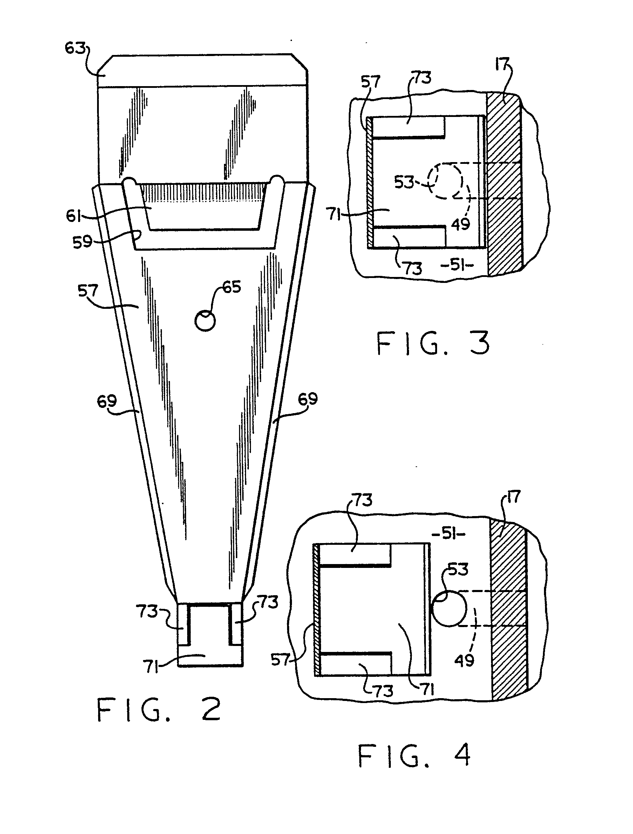

As is well known to those skilled in the art, adjacent the outer periphery of the shear space defined by the lands 39 and 41, is a pumping means (not shown) which pumps fluid out of the shear space and back to the fluid reservoir chamber 37 by means of a radial passage 43 defined by the cover member 17. The cover member 17 also defines a radial passage 45, and further defines an axial passage 49 which communicates with the radial passage 45 and with the innermost extent of the shear space. The cover member 17 defines a generally cylindrical surface 51 which serves as the peripheral boundary of the fluid reservoir chamber 37. The intersection of the radial passage 45 and the cylindrical surface 51 forms a valve port 53 which may best be seen in FIGS. 3 and 4. In operation, when the valve port 53 is uncovered, fluid flows by centrifugal force from the reservoir chamber 37 through the port 53, the radial passage 45, then through the axial passage 49 into the shear space.

Valve Means

Communication of fluid from the reservoir chamber 37 through the valve port 53 is controlled by a valve means, generally designated 55. In the subject embodiment, the valve means 55 is illustrated as including an electro-magnetic valve actuation device, which is controlled electrically by means of a remote condition sensing device, as is well known in the art. However, as mentioned in the background of the disclosure, it is essential for purposes of the present invention only that the valve means include some form of axial actuation mechanism.

The valve means 55 includes an elongated valve element 57, which is shown generally in elevation view in FIG. 2. Preferably, the valve element 57 is formed as a thin, metal stamping although neither the material of the valve element 57, nor its exact configuration are essential features of the present invention, except as noted hereinafter.

Toward the upper portion of the valve element 57 is a cutout portion 59, which is formed by stamping a right angled support portion 61, the vertical leg of which may be welded to the cover member 35, or attached thereto by other suitable means. The extreme upper end of the valve element 57 includes a terminal support portion 63 which is also attached to the cover member 35 to provide a solid, rigid mounting of the valve element 57, relative to the rest of the coupling device.

The valve element 57 also defines a central opening 65, disposed on the axis of rotation of the coupling device, and which receives an actuation pin 67 (shown only in FIG. 1). Movement of the actuation pin 67 results in axual movement of the lower portion of the valve element 57, and is achieved in a manner which will be described subsequently.

As may best be seen in FIG. 2, the valve element 57 includes, along the sides of its lower portion, a pair of angled portions 69, the function of which is to provide additional rigidity to the valve member 57.

At the extreme lower end of the valve element 57 is a flow control portion 71 which is connected to the main body of the valve element 57, and suspended therefrom, by a pair of integral support members 73. The flow control portion 71 is in generally face-to-face engagement with the cylindrical surface 51, such that the portion 71 is able to block fluid flow from the reservoir chamber 37 into the valve port 53, as will be described in greater detail subsequently. In the subject embodiment, the surface 51 is generally cylindrical, except that a region immediately surrounding the valve port 53 is milled flat to facilitate face-to-face engagement between the valve port 53 and the flow control portion 71, which typically is a flat stamped portion.

As may best be seen in FIG. 1, the flow control portion 71 is disposed at approximately a right angle relative to the rest of the valve element 57. It should be noted that in the elevation view of the valve element 57 (FIG. 2), the control portion 71 and support members 73 are shown as being in the same plane as the rest of the valve element 57, merely for ease of illustration. It is an essential feature of the present invention that the flow control portion 71 be disposed generally as shown in FIG. 1, such that axial movement of the valve element 57 results in sliding engagement between the control portion 71 and the cylindrical surface 51, rather than axial separation between the valve element and the valve port, as in the prior art. In the subject embodiment, the surface 51 is generally cylindrical, such that the valve port 53 lies in a plane which is generally parallel to the axis of the coupling. Such an arrangement is acceptable when the plane of the valve element 57 is oriented generally perpendicular to the axis of rotation. Indeed the surface portion (51) is preferred parallel to the axis, with element (57) transverse to the axis. However, within the scope of the present invention, the plane of the valve element 57 may be oriented other than perpendicular to the axis of rotation, in which case the surface 51 could be other than cylindrical and at some angle relative to the axis, and it would be necessary only that the plane containing the valve port 53 be oriented generally perpendicular to the plane of the valve element 57 to facilitate the face-to-face sliding engagement between the flow control portion 71 and valve port 53.

Referring now primarily to FIG. 1, one preferred mechanism for actuating the valve element 57 axially will be described briefly. Disposed within the hollow portion 21 is an electromagnetic coil 75 which, as is well known in the art, would be connected to an external electrical source (not shown) by means of some form of slip ring assembly (not shown) mounted on the input shaft 19, the slip ring assembly being connected to the coil 75 by suitable electrical leads (not shown). The coil 75 is supported on a non-magnetic cylindrical support member 77. Disposed within the right end in FIG. 1 of the member 77 is a spring seat member 79 which defines a cylindrical recess 81.

Slidably disposed within the left end of the cylindrical support member 77 is an armature member 83 which includes, at its right end in FIG. 1, a spring guide portion 85. The armature member 83 is normally biased to the left in FIG. 1 by means of a compression spring member 87 which is disposed about the guide portion 85 and received within the cylindrical recess 81.

The left end of the armature member 83 includes a cylindrical opening into which is press-fit a pin member 89. Disposed on the pin member 89 is a large washer member 91, a pair of relatively small thrust washers 93 disposed on opposite sides of the valve element 57, and finally, a C clip 95 to retain member 91, washers 93, and valve element 57 on the pin 89.

As is well known to those skilled in the art of electromagnetism, the input shaft 19, the spring seat member 79, the armature member 83, and the washer member 91 are all fabricated from a ferrous material, such that energization of the coil 75 results in the formation of an electromagnetic flux path through the hollow portion 21, member 79, member 83, and washer 91.

Referring now to FIG. 1, in conjunction with FIGS. 3 and 4, the operation of the invention will be described in some detail. When the remote

condition sensing device senses that cooling is not presently required, an electrical signal is sent to energize the coil 75, thus creating the magnetic flux path previously described. In the subject embodiment, the flux path is oriented in such a way as to exert a force on the armature member 83, biasing it to the right in FIG. 1, overcoming the biasing force of the spring member 87. This force on the armature 83 moves it and the valve element 57 to the position shown in FIG. 1. In this position, the flow control portion 71 completely covers the valve port 53, thus substantially preventing flow of fluid from the reservoir chamber 37 through the passages 45 and 49 into the shear space. As a result, the fluid coupling device operates in the disengaged mode, as is well known in the art.

When the remote condition sensing device senses a need for increased cooling (increased coupling output speed), the electrical signal to the coil 75 is discontinued, thus permitting the magnetic flux path to deteriorate. This eliminates the electromagnetic force acting on the armature member 83, and permits the spring member 87 to bias the armature 83 toward the left again, thus moving the valve element 57 to the left, and moving the flow control portion 71 to the left, to the position shown in FIG. 4. In the open position shown in FIG. 4, the flow control portion 71 is no longer blocking fluid flow from the reservoir chamber 37 into the valve port 53, and fluid is now able to flow through the passages 45 and 49 and into the shear space, such that the coupling device will now operate in the engaged mode.

It is one important aspect of the present invention that as the valve element 57 is moved axially toward the open position, the actual valving action occurs by means of the flow control portion 71 sliding along the cylindrical surface 51 to gradually uncover the valve port 53, rather than being suddenly separated from the valve port in an axial direction, as in the prior art. As was mentioned in the background of the disclosure, in the prior art axial valve arrangement, the force required to move the valve was the product of the pressure acting against the valve and the area of the port, over which the pressure acts. In the case of the present invention, however, because the flow control portion 71 is being slid along the surface 51, rather than lifted from the surface, the force required to move the valve element 57 and portion 71 is equal to the product of the fluid pressure head and the area of the port 53, and the coefficient of sliding friction between the portion 71 and surface 51. Therefore, because the coefficient of friction in such a situation is always substantially less than unity (1.0), the force required to move the valve element 57 will always be substantially less than the force required to move the prior art axial valve arm. For example, if the pressure head in the reservoir chamber, near the periphery thereof, were approximately 1.4 bar (20 psi), and if the area of the valve port 53 were 0.13 cm$^2$ (.2 square inches), the force required to move the prior valve arm axially would be 17.8 Newton (four pounds). However, by utilizing the present invention, if the coefficient of sliding friction between the portion 71 and surface 51 were about .15, the force required to move the valve arm 57 axially would be only 2.67 Newton (.6 pounds).

It may also be seen that by using the present invention, it is possible to have a very accurate, predictable relationship between axial movement of the valve element 57 and the effective port area, i.e., the extent of opening of the valve port 53. As a result, it is possible with the present invention to achieve any particular desired relationship between the external condition being sensed, and the output speed of the coupling.

## Claims

1. A fluid coupling device of the type including a first rotatable coupling member (13) defining an axis of rotation, cover means (35) associated with said first member to define a fluid chamber therebetween, means (17) disposed to separate said fluid chamber into a fluid operating chamber (33) and a fluid reservoir chamber (37), a second rotatable coupling member (11) disposed in said fluid operating chamber and being rotatable relative to said first coupling member, valve means (53, 55) being operable to control the flow of fluid between said reservoir chamber and said operating chamber, and including a valve port (53) and an elongated valve member (55) oriented generally transverse to said axis and disposed to have at least a portion (57) thereof move axially between first and second positions in response to axial variations of an input member (83), wherein:

said first coupling member (13) defines a surface portion (51) lying generally peripherally of said fluid reservoir chamber (37) and defining said valve port (53), said first coupling member (13) further defining fluid passage means (45, 49) communicating between said valve port and said fluid operating chamber; and

said valve member (55) includes a flow control portion (71) disposed to prevent substantial fluid flow through said valve port (53) when said valve member (55) is in said first position, and to permit substantial fluid flow through said valve port when said valve member is in said second position, and characterized in that

said surface portion (51) comprises a generally cylindrical surface, and

said flow control portion (71) is oriented at approximately a right angle to said portion (57) of said valve member (55); wherein said flow control portion is disposed in sliding engagement with said surface portion (51) in the region of said valve port (53).

2. A device as claimed in Claim 1 and characterized in that the surface portion (51) is inclined at some angle in relation to the axis of rotation, a face-to-face nature of said sliding engagement being maintained.

3. A device as claimed in Claim 1 or 2 characterized by said valve member (55) comprising a generally planar, stamped metal member (57), said flow control portion (71) being formed integrally therewith and attached to said valve member by at least one support member (73), formed integrally with said valve member and said flow control portion.

4. A device as claimed in Claim 3 characterized by said valve member (55) comprising a pair of said support members (73), said flow control portion (71) being attached to said valve member only by said support portions whereby said flow control portion is maintained in face-to-face, sliding engagement with said surface portion (51) during said axial movement of said valve member.

## Patentansprüche

1. Fluidkupplungsvorrichtung mit einem eine Drehachse bildenden ersten drehbaren Kupplungsteil (13), einer Abdeckung (35), die dem ersten Kupplungsteil derart zugeordnet ist, daß zwischen diesen eine Fluidkammer gebildet wird, einer diese Fluidkammer in eine Fluidarbeitskammer (33) und eine Fluidspeicherkammer (37) unterteilenden Anordnung (17), einem in der Fluidarbeitskammer angeordneten und gegenüber dem ersten Kupplungsteil drehbaren zweiten drehbaren Kupplungsteil (11), und einer dem Steuern des Fluidstromes zwischen der Speicherkammer und der Arbeitskammer dienenden Ventilanordnung (53, 55), die eine Ventilöffnung (53) und ein langgestrecktes Ventilorgan (55) aufweist, das im wesentlichen quer zu der Achse ausgerichtet und derart angeordnet ist, daß sich mindestens ein Teil (57) des Ventilorgans aufgrund von axialen Verlagerungen eines Eingangsorgans (83) zwischen ersten und zweiten Stellung axial bewegt, wobei das erste Kupplungsteil (13) einen im wesentlichen in Umfangsrichtung der Fluidspeicherkammer (37) liegenden und die Ventilöffnung (53) bildenden Oberflächenabschnitt (51) sowie eine Fluiddurchlaßanordnung (45, 49) bildet, die eine Verbindung zwischen der Ventilöffnung und der Fluidarbeitskammer herstellt; und

das Ventilorgan (55) einen Stromsteuerabschnitt (71) aufweist, der derart angeordnet ist, daß er einen wesentlichen Fluidstrom durch die Ventilöffnung (53) bei in der ersten Stellung stehendem Ventilorgan (55) verhindert und einen wesentlichen Fluidstrom durch die Ventilöffnung bei in der zweiten Stellung stehendem Ventilorgan erlaubt, dadurch gekennzeichnet, daß

der Oberflächenabschnitt (51) einen im wesentlichen zylindrische Oberfläche aufweist und

der Stromsteuerabschnitt (71) in näherungsweise rechtem Winkel zu dem Teil (57) des Ventilorgans (55) ausgerichtet ist, wobei der Stromsteuerabschnitt in Gleiteingriff mit dem Oberflächenabschnitt (51) im Bereich der Ventilöffnung (53) steht.

2. Vorrichtung nach Anspruch 1, dadurch gekennzeichnet, daß der Oberflächenabschnitt (51) unter einem gewissen Winkel mit Bezug auf die Drehachse geneigt ist und der Gleiteingriff als Eingriff zwischen Stirnfläche und Stirnfläche aufrechterhalten wird.

3. Vorrichtung nach Anspruch 1 oder 2, dadurch gekennzeichnet, daß das Ventilorgan (55) ein im wesentlichen ebenes, gestanztes Metallorgan (57) aufweist und der Stromsteuerabschnitt (71) damit einstückig ausgebildet sowie mit dem Ventilorgan über mindestens ein Trägerorgan (73) verbunden ist, das einstückig mit dem Ventilorgan und dem Stromsteuerabschnitt ausgebildet ist.

4. Vorrichtung nach Anspruch 3, dadurch gekennzeichnet, daß das Ventilorgan (55) zwei Trägerorgane (73) aufweist und der Stromsteuerabschnitt (71) mit dem Ventilorgan nur über die Trägerorgane in Verbindung steht, wodurch der Stromsteuerabschnitt während der Axialbewegung des Ventilorgans in Stirnflächen-zu-Stirnflächen-Gleiteingriff mit dem Oberflächenabschnitt (51) gehalten wird.

**Revendications**

1. Dispositif d'accouplement à fluide du type qui comprend un premier élément d'accouplement rotatif (13) définissant un axe de rotation, un moyen formant couvercle (35) associé audit premier élément pour définir entre eux une chambre à fluide, des moyens (17) disposés pour diviser ladite chambre à fluide en une chambre de travail du fluide (33) et une chambre réservoir de fluide (37), un deuxième élément d'accouplement rotatif (11) disposé dans ladite chambre de travail du fluide et capable de tourner par rapport audit premier élément d'accouplement, un moyen à soupape (53, 55) pouvant être actionné pour commander l'écoulement du fluide entre ladite chambre réservoir et ladite chambre de travail, et comprenant un orifice de soupape (53) et un élément de soupape (55) de forme allongée, orienté sensiblement transversalement audit axe, et disposé de manière qu'au moins une partie (57) de cet élément se déplace axialement entre une première position et une deuxième position en réponse à des variations axiales d'un élément d'entrée (83) dans lequel: ledit premier élément d'accouplement (13) définit une partie de surface (51) qui est située sensiblement à la périphérie de ladite chambre réservoir de fluide (37) et qui définit ledit orifice de soupape (53), ledit premier élément d'accouplement (13) définissant en outre des moyens de passage de fluide (45, 49) qui établissent la communication entre ledit orifice de soupape et ladite chambre de travail du fluide; et ledit élément de soupape (55) comprend une partie de commande de l'écoulement (71) disposée pour empêcher un écoulement substantiel de fluide à travers ledit orifice de soupape (53) lorsque ledit élément de soupape (55) se trouve dans ladite première position et pour permettre un écoulement substantiel de fluide à travers ledit orifice de la soupape lorsque ledit élément de soupape se trouve dans ladite deuxième position, et caractérisé en ce que ladite partie de surface (51) comprend une surface sensiblement cylindrique et ladite partie de commande de l'écoulement (71) est orientée à peu près perpendiculairement à ladite partie (57) dudit élément de soupape (55); ladite partie de commande de l'écoulement étant disposée en contact glissant avec ladite partie de surface (51) dans la région dudit orifice de soupape (53).

2. Dispositif selon la revendication 1, caractérisé en ce que la partie de surface (51) est inclinée d'un certain angle sur l'axe de rotation, tout en conservant la nature face contre face dudit contact glissant.

3. Dispositif selon l'une des revendications 1 et 2, caractérisé en ce que ledit élément de soupape (55) comprend un élément en métal embouti (57) de forme générale plane, ladite partie de commande de l'écoulement (71) étant formée d'un seul tenant avec cet élément et étant fixée audit élément de soupape par au moins un élément support (73) formé d'un seul tenant avec ledit élément de soupape et avec ladite partie de commande de l'écoulement.

4. Dispositif selon la revendication 3, caractérisé en ce que ledit élément de soupape (55) comprend une paire d'éléments supports (73), ladite partie de commande de l'écoulement (71) n'étant fixée audit élément de soupape que par lesdites parties supports, de sorte que ladite partie de commande de l'écoulement est maintenue en contact glissant, face contre face, avec ladite partie de surface (51) pendant ledit mouvement axial dudit élément de soupape.

FIG. 1

FIG. 2

FIG. 3

FIG. 4